Europäisches Patentamt

(19) European Patent Office  (11) Publication number: **0 095 842**

Office européen des brevets  **B1**

(12) **EUROPEAN PATENT SPECIFICATION**

(45) Date of publication of patent specification: **18.12.85**  (51) Int. Cl.⁴: **F 16 F 1/06,** F 16 D 13/68

(21) Application number: **83302650.3**

(22) Date of filing: **11.05.83**

(54) Torsional vibration dampers.

(30) Priority: **01.06.82 GB 8215956**

(43) Date of publication of application:
**07.12.83 Bulletin 83/49**

(45) Publication of the grant of the patent:
**18.12.85 Bulletin 85/51**

(84) Designated Contracting States:
**BE DE FR GB IT SE**

(56) References cited:
**DE-A-1 930 805**
**FR-A-1 213 399**
**FR-A-1 253 864**
**FR-A-2 050 575**
**GB-A- 270 169**
**GB-A- 690 340**
**GB-A-1 257 611**
**US-A-4 197 931**

(73) Proprietor: **AUTOMOTIVE PRODUCTS PUBLIC**
**LIMITED COMPANY**
**Tachbrook Road**
**Leamington Spa Warwickshire CV31 3ER (GB)**

(72) Inventor: **Draper, Colin Reginald**
**1 Risdale Close**
**Leamington Spa Warwickshire CV32 6NN (GB)**

(74) Representative: **Cundy, Anthony Brian**
**Anthony Cundy & Company 384 Station Road**
**Dorridge**
**Solihull West Midlands B93 8ES (GB)**

Courier Press, Leamington Spa, England.

# Description

The invention relates to torsional vibration dampers as used in clutch driven plates. A typical clutch driven plate is shown in GB—A—1 257 611. A pair of side plates are driven by friction facing carriers and transmit torque to a flanged hub through helical springs arranged in apertures in the side plates and hub flange.

It has been found that if the springs are a tight axial fit in the spring windows then the spring pre-load gives rise to "idling rattle", that is gear train noises during engine idling. One means of helping to cure idling rattle is to provide springs which have a free length slightly less than the window length. Owing to the tolerance spread of the spring free length and the window lengths, the springs can then appear to be too loose when the driven plate is handled before fitting to the rest of the clutch, even though the springs do not rattle in use due to the effects of centrifugal force.

According to the invention there is provided a torsional vibration damper comprising at least one side plate, a flanged hub and springs arranged in windows in the side plate and hub flange for transmitting drive between the side plate and the hub, at least one of said springs having a length less than the lengths of the associated windows, wherein said one spring or at least one of the windows associated therewith has a coating of a yieldable material which temporarily increases the effective size of the coated component such that said one spring fits in at least one of the associated windows without substantial free play, said coating yielding in use to re-establish clearance between the spring and said windows. Preferably the yieldable material is a thermoplastic resin. In use of the torsional vibration damper, the coating yields to allow contact between the spring and hub flange or side plate, re-establishing clearance between the spring and associated windows.

An embodiment of the invention will be described with reference to the accompanying drawings in which:—

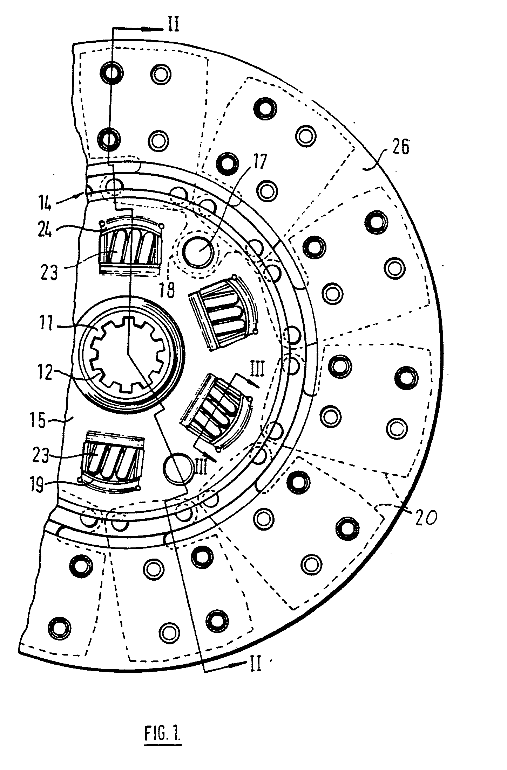

Figure 1 is an end elevation of a friction clutch driven plate incorporating a torsional vibration damper;

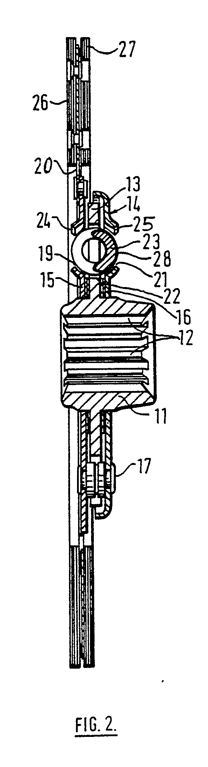

Figure 2 is a section on line II—II of figure 1;

Figure 3 is a section on line III—III of figure 1 on a larger scale; and

Figure 4 corresponds to figure 3 but shows a modification.

The friction clutch driven plate shown in the drawings incorporates a hub 11 having internal splines 12 for establishment of a driving connection to a gearbox input shaft (not shown). Hub 11 has an integral outwardly extending radial flange 13.

A friction facing carrier 14 is constituted primarily by two side plates 15 and 16 joined together by rivets 17. Side plates 15 and 16 are positioned one to each side of the flange 13 and are guided by the hub 11 for angular movement with respect to the hub about the hub axis. Rivets 17 pass through recesses 18 in the outer edge of the hub 13 with a clearance in such a way that the rivets 17 act as stop pins to restrict the angular movement between the hub and the carrier 14.

The side plates 15 and 16 and also the hub 13 are provided with aligned openings known as windows as shown at 19, 21 and 22. A steel coil spring 23 is arranged in each set of aligned windows with its axis running in a circumferential direction with respect to the hub axis. Windows 19 and 21 have spring retainers 24 and 25 bent out from the material of the side plates at the edges of the windows.

Side plate 15 carries a series of spring segments 20 which in turn carry two annular friction facings 26 and 27. As thus far described, the driven plate is entirely conventional and corresponds with that described in UK patent specification 1 257 611 A. In use, torque applied to the friction facings is transmitted to the hub through the springs 23 which allow resilient angular deflection between the hub and the friction facing carrier and thus tend to damp torsional vibrations in the drive through the clutch driven plate. It is of course the springs 23 acting in the windows 19, 21 and 22 of side plates 15 and 16 and hub flange 13 which act as a torsional vibration damper.

In use of the driven plate it is desirable for the springs 23 to have a small clearance within the windows to ensure that the springs are not precompressed. Pre-compression of the springs leads to requirement for a finite and possibly substantial torque to overcome this preload before there is any deflection. Such an arrangement is detrimental to the effectiveness of the torsional vibration damper, particularly in relation to the occurrence of idling rattle. There is a contrasting requirement to avoid loose springs which rattle in the windows because this erroneously gives the impression of a low quality product. It is impractical to work to such close tolerances as would avoid rattling of the springs and would also avoid significant pre-compression.

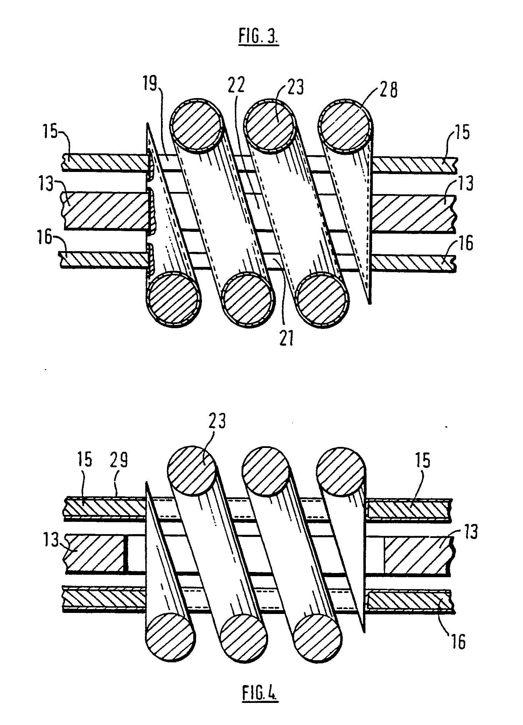

In accordance with the invention and as best seen in figure 3, the springs 23 are provided with a coating 28 of yieldable material. In this context, yieldable material means material which in use of the driven plate for transmission of load will collapse at the points of contact between the springs and the edges of the windows so that after very little use, the coating has no significant effect on torque transmission through the driven plate.

In a typical application the springs are dry coated with nylon to a thickness of approximately 0.30 mm. The free length of the springs 23 is controlled to a tolerance of ±0.25 mm and the length of the windows to ±0.05. This enables the difference between the length of the spring and the length of the window to be the range of 0 to 0.60 mm, which on the upper limit is taken by a coating thickness of 0.30 mm on each end of the spring thus just avoiding any clearance leading to spring rattle. In the remainder of the tolerance band the spring has a small pre-load when fitted but this is reduced or eliminated by the yielding of the coating on indentation by the edges of the windows. The left hand end of figure 3 illustrates this latter situation with the side plates 15 and 16 and flange 13 embedded in the coating 28 and in contact with the steel of the springs. The right hand end of figure 3 shows the situation on installation when the coating 28 takes up the clearance and avoids spring rattle.

In an alternative construction illustrated in figure 4, the coating 29 is applied to the associated side plate or hub flange. The length of some of the windows in the hub flange may be greater than the corresponding window length in the side plates so as to prevent some of the springs coming into action immediately and give progressive loading of the springs with relative angular movement. In such cases the invention only concerns the window of the smaller length, in this case the side plate windows. As in figure 3, the left hand end of figure 4 shows the situation after yielding of the coating and the right hand end shows the situation on installation.

In some cases springs of very low rate are fitted to control initial angular movement of a multistage torsional vibration damper and these light springs need not be coated or associated with coatings at the edges of the windows. Similarly the high rate springs of a three or more rate damper may have a normal preload and thus need not be coated or associated with coatings at the edges of the windows.

Although the whole surface of the springs or the component incorporating the windows may be coated, the coatings may alternatively be restricted to the ends of the springs or the window regions of the other components.

## Claims

1. A torsional vibration damper comprising at least one side plate (15 or 16), a flanged hub (13) and springs (23) arranged in windows in the side plate and hub flange for transmitting drive between the side plate and the hub, at least one of said springs having a length less than the lengths of the associated windows, characterised in that said one spring or at least one of the windows associated therewith has a coating (28) of a yieldable material which temporarily increases the effective size of the coated component such that said one spring fits in at least one of the associated windows without substantial free play, said coating yielding in use to re-establish clearance between said spring and said windows.

2. A torsional vibration damper according to claim 1, characterised in that the yieldable material is a thermoplastic resin.

3. A torsional vibration damper according to claim 2, characterised in that the thermoplastic resin is nylon.

4. A torsional vibration damper according to any one of the preceding claims, characterised in that the springs are steel helical coil springs (23) coated with the yieldable material (28).

## Revendications

1. Amortisseur de vibrations de torsion comprenant au moins une plaque latérale (15 ou 16), un moyeu à plateau (13) et des ressorts (23) disposés dans des fenêtres ménagées dans la plaque latérale et le plateau de moyeu pour transmettre un entraînement entre la plaque latérale et le moyeu, au moins l'un desdits ressorts présentant une longueur inférieure aux longueurs des fenêtres associées, caractérisé en ce que ledit ressort ou au moins l'une des fenêtres qui y sont associées présente un revêtement (28) un matériau déformable et qui accroît temporairement la dimension effective du composant revêtu de manière telle que ledit ressort s'ajuste dans au moins l'une des fenêtres associées sans jeu libre notable, ledit revêtement déformable rétablissant un débattement entre ledit ressort et lesdites fenêtres en cours d'utilisation.

2. Amortisseur de vibrations de torsion selon la revendication 1, caractérisé en ce que le matériau déformable est une résine thermoplastique.

3. Amortisseur de vibrations de torsion selon la revendication 2, caractérisé en ce que la résine thermoplastique est du nylon.

4. Amortisseur de vibrations de torsion selon l'une quelconque des revendications précédentes, caractérisé en ce que les ressorts sont des ressorts à spires hélicoïdales en acier (23) revêtus à l'aide du matériau déformable (28).

## Patentansprüche

1. Drehschwingungsdämpfer mit mindestens einer Seitenplatte (15 oder 16), einer mit einem Flansch versehenen Nabe (13) und Federn (23), die in Fenstern in der Seitenplatte und dem Nabenflansch zum Übertragen einer Antriebskraft zwischen der Seitenplatte und der Nabe angeordnet sind, wobei mindestens eine der Federn eine Länge hat, die geringer als die Längen der zugehörigen Fenster ist, dadurch gekennzeichnet, daß die eine Feder oder mindestens eines der zugehörigen Fenster eine Beschichtung (28) aus einem nachgiebigen Material hat, das die effektive Größe des beschichteten Bauteils vorübergehend derart erhöht, daß die eine Feder ohne erhebliches Spiel in mindestens eines der zugehörigen Fenster paßt, wobei die Beschichtung im Gebrauch nachgibt, um das Spiel zwischen der Feder und den Fenstern wiederherzustellen.

2. Drehschwingungsdämpfer nach Anspruch 1, dadurch gekennzeichnet, daß das nachgiebige Material ein thermoplastisches Harz ist.

3. Drehschwingungsdämpfer nach Anspruch 2, dadurch gekennzeichnet, daß das thermoplastische Harz Nylon ist.

4. Drehschwingungsdämpfer nach einem der vorhergehenden Ansprüche, dadurch gekennzeichnet, daß die Federn Stahlschraubenfedern (23) sind, die mit dem nachgiebigen Material (28) beschichtet sind.

FIG. 1.

FIG. 2.

FIG. 3.

FIG. 4